# EUROPEAN PATENT SPECIFICATION

(11) **EP 1 412 763 B1**
(45) Date of publication and mention of the grant of the patent: **16.01.2008**
(21) Application number: 02741566.0
(22) Date of filing: 05.06.2002
(51) Int. Cl.: G01R 19/25, H04L 5/06, H04M 11/06

(54) **METHOD AND ARRANGEMENT FOR REDUCING POWER CONSUMPTION OF A LINE DRIVER**
VERFAHREN UND ANORDNUNG ZUR VERRINGERUNG DER STROMAUFNAHME EINES LEITUNGSTREIBERS
PROCEDE ET DISPOSITION POUR REDUIRE LA CONSOMMATION DE COURANT D'UN TRANSMETTEUR DE COMMANDE DE LIGNE

(30) Priority: 20.06.2001 SE 0102201
(43) Date of publication of application: 28.04.2004
(73) Proprietor: TELEFONAKTIEBOLAGET LM ERICSSON (publ), 164 83 Stockholm (SE)
(72) Inventor: BARKARÖ, Stefan, S-184 60 Akersberga (SE)
(74) Representative: Hopfgarten, Nils
(86) International application number: PCT/SE2002/001105
(87) International publication number: WO 2002/103374

(56) References cited:
- JOONGHO CHOI ET AL.: '3.3-V line drivers for digital subscriber line applications' THE 2001 IEEE INTERNATIONAL SYMPOSIUM ON CIRCUITS AND SYSTEMS, 2001. ISCAS 2001 vol. 1, 06 May 2001 - 09 May 2001, pages 711 - 714, XP010541529
- CLOETENS L.: 'Broadband access: the last mile' SOLID STATE CIRCUITS CONFERENCE, 2001. DIGEST TECHICAL PAPERS. ISSCC. 2001 IEEE INTERNATIONAL 05 February 2001 - 07 February 2001, pages 18 - 21, XP002955190
- PARHI K.K.: 'Approaches to low-power implementations of DSP systems' IEEE TRANSACTIONS ON CIRCUITS AND SYSTEMS I: FUNDAMENTAL THEORY AND APPLICATIONS October 2001, pages 1214 - 1224, XP002955191

## Description

### TECHNICAL FIELD

The invention relates generally to line drivers in multitone communication systems and more specifically to a method and an arrangement for reducing power consumption of line drivers in such systems.

### BACKGROUND OF THE INVENTION

Before data communication can start between two line drivers/receivers connected to respective end of a transmission line in a multitone communication system such as an ADSL (Asymmetric Digital Subscriber Line) system, the bit rate to be used, i.e. the number of bits that can be allocated on each tone, is determined during a training sequence. The line drivers transmit known specific signal patterns of different frequency bands and the respective line receiver measures the signal-to-noise ratio (SNR) to determine the bit rate that can be used. The signal levels received by the respective line receiver is set by the length of the transmission line, i.e. the line length, and cannot be influenced. The noise level or noise floor of the respective line driver is set by the distortion that is transmitted by the line driver itself and echoed back to the line receiver.

Thus, in order to maximize the bit rate in a multitone system, the line driver has to have a very low distortion.

In order for the distortion to be low in the line driver, the quiescent current of the line driver has to be high. Hereby, so-called zero crossing distortion is avoided. Such distortion appears due to the fact that the output stage transistors in the line driver are recharged when the polarity of the signal is changed. With a higher quiescent current, a smoother transition is obtained between the two polarities resulting in lower distortion.

However, a high quiescent current causes high power consumption in the line driver.

The article by CLOETENS L.: 'Broadband access: the last mile' SOLID STATE CIRCUITS CONFERENCE, 2001. DIGEST TECHICAL PAPERS. ISSCC. 2001 IEEE INTERNATIONAL 05 February 2001 - 07 February 2001, pages 18 - 21, discloses an Asymmetric Digital Subscriber Line and teaches that the line driver is the largest contributor to the overall power consumption of the system. The article suggests using low-distortion class G amplifiers to reduce the power consumed.

### SUMMARY OF THE INVENTION

The object of the invention is to minimize the quiescent current and thereby the power consumption of the line driver.

This is attained by the method according to the invention of reducing power consumption of a first line driver/receiver adapted to communicate with a second line driver/receiver via a transmission line in a multitone communication system, wherein, during a training sequence, the second line driver transmits a known multitone signal pattern to the first line receiver, the first line receiver measures the signal-to-noise ratio of the received signal pattern and, in response hereto, determines an appropriate bit rate to be used, in that quiescent current of the first line driver is decreased in steps, a decrease in the measured signal-to-noise ratio is detected, and the quiescent current of the first line driver is set to the value it had before the decrease of the signal-to-noise ratio was detected.

This is also attained by the arrangement according to the invention for reducing power consumption of a first line driver/receiver adapted to communicate with a second line driver/receiver via a transmission line in a multitone communication system, wherein, during a training sequence, the second line driver is adapted to transmit a known multitone signal pattern to the first line receiver that is adapted to measure the signal-to-noise ratio of the received signal pattern and, in response hereto, determine an appropriate bit rate to be used, in that the first line driver/receiver is connected to a processor that is adapted to decrease quiescent current of the first line driver in steps, to detect a decrease of the measured signal-to-noise ratio, and to set the quiescent current of the first line driver to the value it had before the decrease of the signal-to-noise ratio was detected.

In other words, the quiescent current of the line driver is decreased until the noise floor is raised in the line driver.

By lowering the quiescent current, the power consumption of the line driver will be lowered.

### BRIEF DESCRIPTION OF THE DRAWING

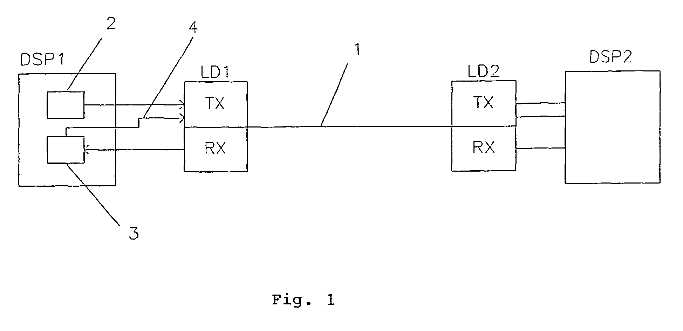

The invention will be described below with reference to the appended drawing on which Fig. 1 is a schematic illustration of an arrangement according to the invention.

### DESCRIPTION OF THE INVENTION

In Fig. 1, two line drivers/receivers LD1, LD2 in a multitone communication system are to communicate via a transmission line 1. LD1 is assumed to be located at the station end of the transmission line 1, while LD2 is assumed to be located at the subscriber end.

Each line driver/receiver LD1, LD2 comprises a transmitter TX and a receiver RX.

To control the communication between the line drivers/receivers LD 1 and LD2, digital signal processors DSP1 and DSP2 are associated with the respective line driver/receiver LD1, LD2.

Before the communication is started, the line drivers/receivers LD1, LD2 run through a so-called training sequence initiated by the digital signal processors to determine the bit rates to be used on the transmission line 1.

During the training sequence, the transmitters Tx of the line drivers/receivers LD1, LD2 transmit known multitone signal patterns at different frequency bands under control of a training sequence generator 2 in the respective digital signal processor DSP 1, DSP2, and signal-to-noise ratios (SNRs) at the respective line driver/receiver LD1, LD2 are measured by an SNR detector 3 in the respective digital signal processor DSP1, DSP2.

The measured SNRs set the bit rates to be used on the transmission line 1 in the upstream direction (subscriber to station) and the down-stream direction (station to subscriber), respectively.

In accordance with the invention, to reduce the power consumption of the line drivers/receivers LD1, LD2, the quiescent current of the respective line driver is reduced.

In response to the SNR measured by the SNR detector 3, the digital signal processor DSP1 is adapted via the SNR detector 3 to in steps decrease the quiescent current of the line driver LD1. To enable this, the line driver LD1 is provided with means for changing its quiescent current in response to a control signal on a wire 4 from the SNR detector 3. After each decrease, the SNR detector 3 is adapted to measure the SNR and compare the value with the previous value.

When a decrease in the measured SNR is detected by the SNR detector 3, the digital signal processor DSP1 is adapted to set the value of the quiescent current to the value it had before the decrease of the SNR was detected.

Hereby, the quiescent current will be set to as low a value as possible and the power consumption of the line driver/receiver LD 1 will be minimized, resulting in a reduced power consumption.

## Claims

1. A method of reducing power consumption of a first line driver/receiver adapted to communicate with a second line driver/receiver via a transmission line in a multitone communication system, wherein, during a training sequence, a known multitone signal pattern is transmitted from the second line driver to the first line receiver, the signal-to-noise ratio of the signal pattern received by the first line receiver is measured and, in response hereto, an appropriate bit rate to be used is determined, **characterized in**
- **that** the quiescent current of the first line driver is decreased in steps,
- **that** a decrease in the measured signal-to-noise ratio is detected, and
- **that** the quiescent current of the first line driver is set to the value it had before the decrease of the signal-to-noise ratio was detected.

2. An arrangement for reducing power consumption of a first line driver/receiver (LD1) adapted to communicate with a second line driver/receiver (LD2) via a transmission line (1) in a multitone communication system, wherein, during a training sequence, the second line driver is adapted to transmit a known multitone signal pattern to the first line receiver, a signal processor (DSP1) connected to the first line driver/receiver (LD1) is adapted to measure the signal-to-noise ratio of the received signal pattern and, in response hereto, determine an appropriate bit rate to be used, **characterized in that** the processor (DSP1) is adapted to decrease the quiescent current of the first line driver in steps, that the processor (DSP1) is adapted to detect a decrease of the measured signal-to-noise ratio, and that the processor (DSP1) is adapted to set the quiescent current of the first line driver to the value it had before the decrease of the signal-to-noise ratio was detected.

## Patentansprüche

1. Verfahren zum Reduzieren des Energieverbrauchs eines ersten Leitungstreibers/-empfängers, der angepasst ist, um mit einem zweiten Leitungstreiber/-empfänger über eine Übertragungsleitung in einem Mehrton-Kommunikationssystem zu kommunizieren, wobei während einer Trainingsequenz ein bekanntes Mehrtonsignalmuster von dem zweiten Leitungstreiber zu dem ersten Leitungsempfänger übertragen wird, das Signal-Rausch-Verhältnis des Signalmusters, das durch den ersten Leitungsempfänger empfangen wird, gemessen wird, und ansprechend hierauf eine geeignete zu verwendende Bitrate bestimmt wird, **dadurch gekennzeichnet,**
- **dass** der Ruhestrom des ersten Leitungstreibers in Schritten verringert wird,
- **dass** eine Verringerung des gemessenen Signal-Rausch-Verhältnisses erfasst wird, und
- **dass** der Ruhestrom des ersten Leitungstreibers auf den Wert, den derselbe hatte, bevor die Verringerung des Signal-Rausch-Verhältnisses erfasst wurde, eingestellt wird.

2. Anordnung zum Reduzieren des Energieverbrauchs eines ersten Leitungstreibers/-empfängers (LD1), der angepasst ist, um mit einem zweiten Leitungstreiber/-empfänger (LD2) über eine Übertragungsleitung (1) in einem Mehrton-Kommunikationssystem zu kommunizieren, wobei während einer Trainingsequenz der zweite Leitungstreiber angepasst ist, um ein bekanntes Mehrtonsignalmuster zu dem ersten Leitungsempfänger zu senden, ein Signalprozessor (DSP1), der mit dem ersten Leitungstreiber/-empfänger (LD1) verbunden ist, angepasst ist, um das Signal-Rausch-Verhältnis des empfangenen Signalmusters zu messen und ansprechend hierauf eine geeignete zu verwendende Bitrate zu bestimmen, **dadurch gekennzeichnet, dass** der Prozessor (DSP1) angepasst ist, um den Ruhestrom des ersten Leitungstreibers in Schritten zu verringern, dass der Prozessor (DSP1) angepasst ist, um eine Verringerung des gemessenen Signal-Rausch-Verhältnisses zu erfassen, und dass der Prozessor (DSP1) angepasst ist, um den Ruhestrom des ersten Leitungstreibers auf den Wert, den derselbe hatte, bevor die Verringerung des Signal-Rausch-Verhältnisses erfasst wurde, einzustellen.

## Revendications

1. Procédé de réduction de la consommation de puissance d'un premier attaqueur/récepteur de ligne conçu pour communiquer avec un second attaqueur/récepteur de ligne par l'intermédiaire d'une ligne de transmission dans un système de communication multifréquence, dans lequel, pendant une séquence de formation, une combinaison de signal multifréquence connue est transmise du second attaqueur de ligne au premier récepteur de ligne, le rapport signal-bruit de la combinaison de signal reçue par le premier récepteur de ligne est mesuré et, en réponse à cette mesure, un débit binaire approprié devant être utilisé est déterminé, **caractérisé en ce que**
- le courant de repos du premier attaqueur de ligne est abaissé par étapes,
- une diminution du rapport signal-bruit mesuré est détectée, et
- le courant de repos du premier attaqueur de ligne est établi à la valeur qu'il avait avant la détection de la diminution du rapport signal-bruit.

2. Montage pour réduire la consommation de puissance d'un premier attaqueur/récepteur de ligne (LD1) conçu pour communiquer avec un second attaqueur/récepteur de ligne (LD2) par l'intermédiaire d'une ligne de transmission (1) dans un système de communication multifréquence, dans lequel, pendait une séquence de formation, le second attaqueur de ligne est conçu pour transmettre une combinaison de signal multifréquence connue au premier récepteur de ligne, un processeur de signal (DSP1) connecté au premier attaqueur/ récepteur due ligne (LD1) est conçu pour mesurer le rapport signal-bruit de la combinaison de signal reçue et, en réponse à cette mesure, pour déterminer un débit binaire approprié devant être utilisé, **caractérisé en ce que** le processeur (DSP1) est conçu pour diminuer le courant de repos du premier attaqueur de ligne par étape, le processeur (DSP1) est conçu pour détecter une diminution du rapport signal-bruit mesuré, et le processeur (DSP1) est conçu pour établir le courant de repos du premier attaqueur de ligne à la valeur qu'il avait avant la détection de la diminution du rapport signal-bruit.
